# EUROPÄISCHE PATENTSCHRIFT

(11) **EP 1 782 904 B1**
(45) Veröffentlichungstag und Bekanntmachung des Hinweises auf die Patenterteilung: **22.02.2012**
(21) Anmeldenummer: 06022563.8
(22) Anmeldetag: 28.10.2006
(51) Int. Cl.: B23D 21/00, B23D 45/12

(54) **Trennvorrichtung für Werkstücke, wie Rohre, Stangen und dergleichen**
Cutting device for workpieces like tubes, bars, or the like
Dispositif de coupe pour des pièces telles que des tubes, des barres, ou similaires

(30) Priorität: 03.11.2005 DE 102005053179
(43) Veröffentlichungstag der Anmeldung: 09.05.2007
(73) Patentinhaber: REMS-WERK Christian Föll und Söhne GmbH, 71332 Waiblingen (DE)
(72) Erfinder: Dr.-Ing. Rudolf Wagner, 70376 Stuttgart (DE)
(74) Vertreter: Jackisch-Kohl, Anna-Katharina

(56) Entgegenhaltungen:
- WO-A-98/16342
- BE-A- 521 973
- DE-A1- 3 345 875
- DE-A1- 3 825 152
- DE-A1- 4 013 470
- DE-C- 919 332
- FR-A- 1 261 014
- FR-A- 1 268 159
- US-A- 963 610
- US-A- 1 480 263
- US-A- 1 585 535
- US-A- 2 272 179
- US-A- 2 657 719
- US-A- 5 261 301
- US-A- 5 653 033

## Beschreibung

Die Erfindung betrifft eine Trennvorrichtung für Werkstücke, wie Rohre, Stangen und dergleichen, nach dem Oberbegriff des Anspruches 1.

Es sind Trennvorrichtungen bekannt, die ein drehbar angetriebenes Schneidrad haben, mit dem Rohre durchtrennt werden. Das Schneidrad sitzt auf einem Schwenkträger, der um eine parallel zur Rohrachse liegende Achse schwenkbar ist. Durch Schwenken des Trägers um diese Achse wird das Schneidrad gegen das auf der Auflage liegende Rohr bewegt, das beim Schwenkvorgang durchgetrennt wird. Der zum Drehantrieb des Schneidrades vorgesehene Antrieb sitzt neben dem Schneidrad auf dem Träger.

Eine derartige Trennvorrichtung ist in der DE 4013470 A1 offenbart.

Der Erfindung liegt die Aufgabe zugrunde, die gattungsgemäße Trennvorrichtung so auszubilden, daß das Werkstück einwandfrei mit dem Schneidrad durchgetrennt werden kann.

Diese Aufgabe wird bei der gattungsgemäßen Trennvorrichtung erfindungsgemäß mit den kennzeichnenden Merkmalen des Anspruches 1 gelöst.

Bei der erfindungsgemäßen Trennvorrichtung befindet sich der Antrieb im Bereich oberhalb des Schneidrades. Dadurch ist eine einfache Antriebsverbindung zum Schneidrad gewährleistet. Die Trennvorrichtung ist infolge der erfindungsgemäßen Ausbildung kompakt ausgebildet. Der Antrieb stabilisiert die Eingriffsverhältnisse, so daß ein sauberer Trennschnitt erreicht wird. Das Schneidrad kann so in bezug auf das Werkstück angeordnet werden, daß während des Trennvorganges keine Querkräfte auf das Werkstück wirken, so daß das Werkstück nicht von der Auflage weggedrückt wird.

Besonders vorteilhaft ist es, wenn der Kontaktbereich zwischen dem Schneidrad und dem Werkstück in einer Ebene liegt, die eine Längssymmetrieebene der Auflage bildet. Dann wird das Werkstück beim Trennvorgang fest in die Auflage gedrückt, wobei auf das Werkstück wirkende Querkräfte zuverlässig vermieden werden.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in Vorderansicht eine erfindungsgemäße Trennvorrichtung,
- Fig. 2: teilweise im Schnitt und teilweise in Ansicht die erfindungsgemäße Trennvorrichtung zu Beginn eines Trennvorganges,
- Fig. 3: in einer Darstellung entsprechend Fig. 2 die Trennvorrichtung vor dem Durchtrennen eines im Durchmesser kleineren Rohres,
- Fig. 4: einen Schnitt durch einen Antrieb der erfindungsgemäßen Trennvorrichtung,
- Fig. 5: in einer Darstellung entsprechend Fig. 1 eine zweite Ausführungsform einer erfindungsgemäßen Trennvorrichtung,
- Fig. 6: einen Schnitt durch die Trennvorrichtung gemäß Fig. 5.

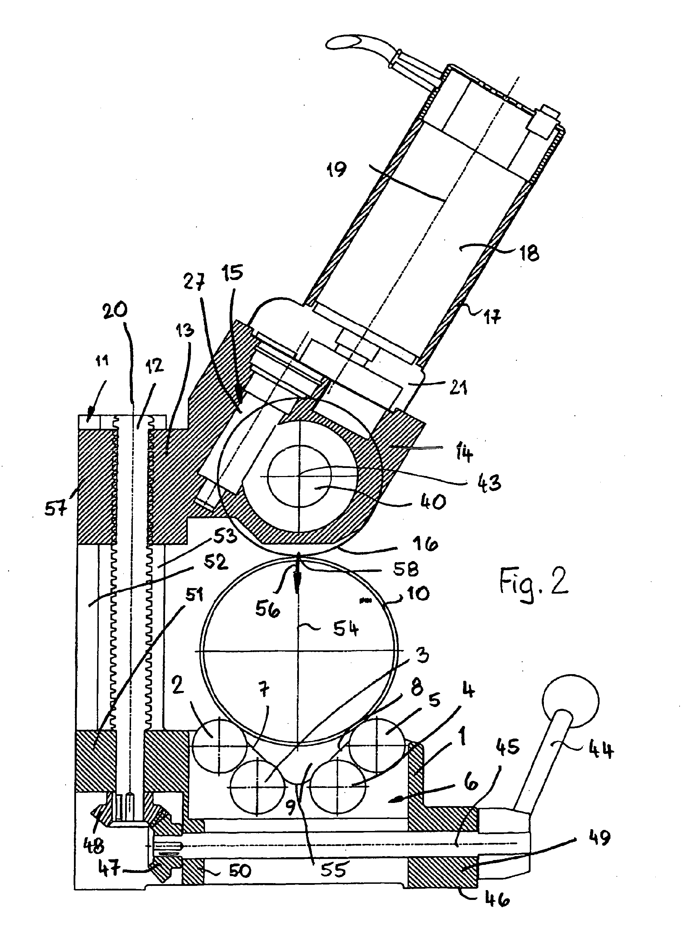

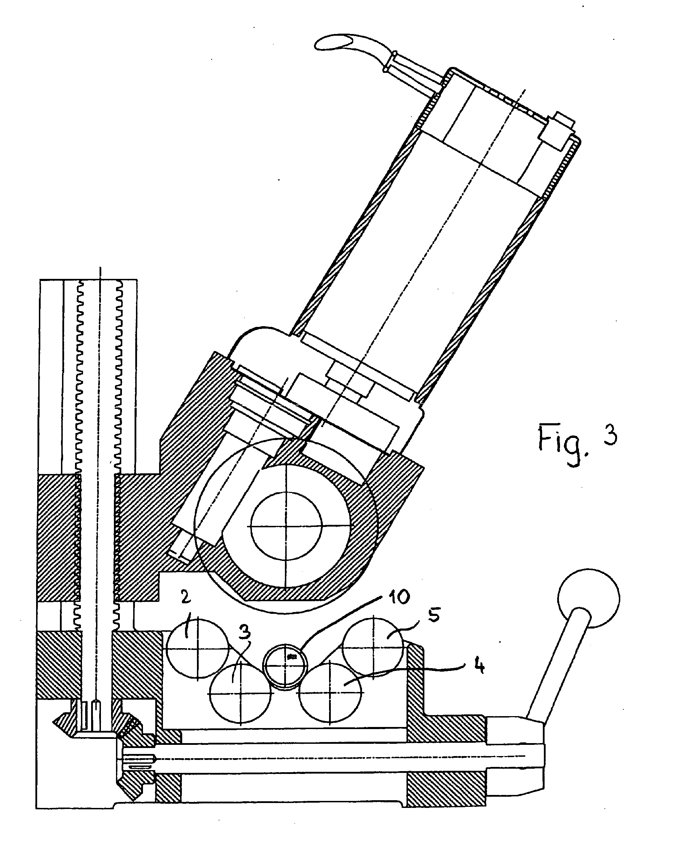

Mit der Trennvorrichtung werden Rohre unterschiedlichen Durchmessers abgetrennt. Die Vorrichtung hat ein Bett 1, an dessen Oberseite mehrere Auflagerollen 2 bis 5 frei drehbar gelagert sind. Sie haben vorteilhaft gleichen Durchmesser und sind mit ihren Enden in Lagerböcken 6 drehbar gelagert. Sie sind vorteilhaft einstückig mit dem Bett 1 ausgebildet. Die Rollen 2 bis 5 sind vorteilhaft mit einem Reibbelag versehen. Wie Fig. 2 zeigt, sind die Rollen 2 bis 5 so angeordnet, daß sie geringfügig über V-förmig zueinander liegende Wände 7, 8 einer in der Oberseite der Lagerböcke 6 vorgesehenen Vertiefung 9 vorstehen. Sie erstreckt sich über die gesamte Dicke des jeweiligen Lagerbockes 6. Je nach Durchmesser der mit der Trennvorrichtung durchzutrennenden Rohre 10 dienen unterschiedliche Rollen 2 bis 5 als Auflage für das Rohr 10. Fig. 2 zeigt beispielhaft ein im Durchmesser größeres Rohr 10, das auf den beiden äußeren Rollen 2 und 5 aufliegt. In Fig. 3 ist beispielhaft der Fall dargestellt, daß ein im Durchmesser kleines Rohr 10 durchgetrennt werden soll. Es liegt dementsprechend nur auf den beiden mittleren Rollen 3 und 4 auf.

Die parallel zueinander liegenden Rollen 2 bis 5 sind beispielhaft so angeordnet, daß die beiden äußeren Rollen 2 und 5 auf gleicher Höhe liegen, während die inneren Rollen 3, 4 tiefer liegen, jedoch untereinander ebenfalls auf gleicher Höhe angeordnet sind.

An einer Längsseite des Bettes 1 ist ein vertikaler Ständer 11 vorgesehen, in dem eine um ihre Achse drehbare Gewindespindel 12 drehbar gelagert ist. Auf ihr sitzt eine Spindelmutter 13, die durch Drehen der Gewindespindel 12 nach oben und nach unten bewegt werden kann. Die Gewindespindel 13 ist mit einem Gehäuseteil 14 verbunden, in dem ein Getriebe 15 zum Antrieb eines Schneidrades 16 untergebracht ist. Der Gehäuseteil 14 ist lösbar mit einem Gehäuseteil 17 verbunden, in dem ein Antrieb 18, vorzugsweise ein Elektromotor, untergebracht ist. Die Achse 19 des Gehäuseteiles 17 liegt unter einem spitzen Winkel zur Achse 20 der Gewindespindel 12. Der Gehäuseteil 17 ist somit von der Spindelmutter 13 aus schräg nach oben gerichtet, so daß er von der Bedienungsperson bequem erfaßt werden kann.

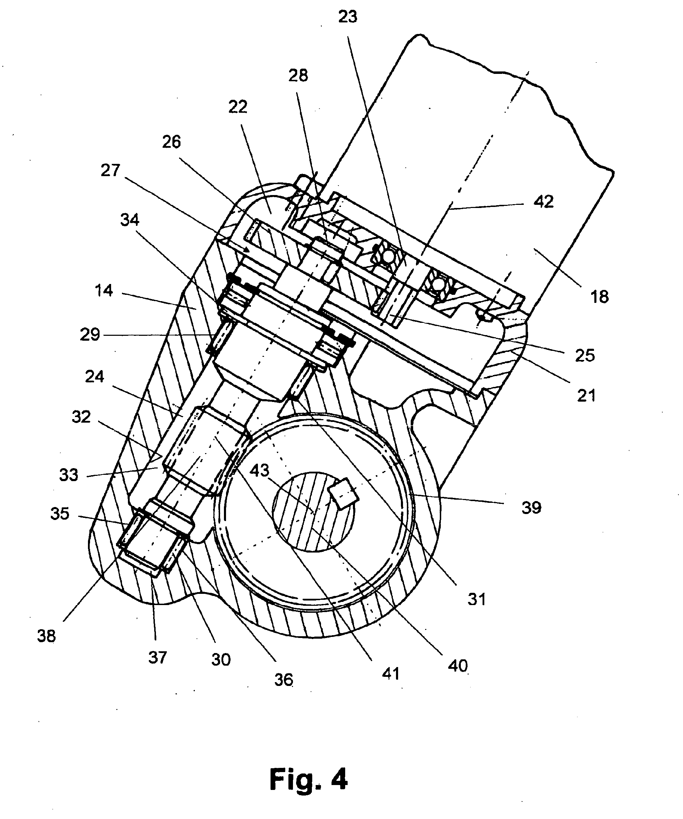

Zwischen dem Gehäuseteil 14 und dem Gehäuseteil 17 befindet sich ein Zwischengehäuseteil 21, das lösbar mit dem Gehäuseteil 14 und/oder dem Gehäuseteil 17 verbunden ist. Im Gehäuseteil 21 ist eine erste Getriebestufe 22 (Fig. 4) untergebracht, mit der die Drehzahl der Motorwelle 23 des Antriebs 18 in einer ersten Stufe heruntergesetzt werden kann. Der ersten Getriebestufe 22 ist eine zweite Getriebestufe 24 nachgeordnet, die im Gehäuseteil 14 untergebracht ist. Auf diese Weise wird die hohe Drehzahl der Motorwelle 23 über zwei Getriebestufen 22, 24 in die Drehzahl des Schneidrades 16 untersetzt.

Das freie Ende der Motorwelle 23 ist mit einem Ritzel 25 versehen, das in Eingriff ist mit einem Zahnrad 26, das auf dem einen Ende einer Welle 27 sitzt. Das Ritzel 25 und das Zahnrad 26 sind im Gehäuseteil 21 untergebracht. Das Ritzel 25 hat kleineren Durchmesser als das Zahnrad 26. Das dem Zahnrad 26 benachbarte Ende 28 der Welle 27 ist fliegend gelagert. Die Welle 27 ragt in den Gehäuseteil 14, in dem sie mit Wälzlagern 29, 30, vorzugsweise Rollenlagern, drehbar gelagert ist. Das eine Wälzlager 29 liegt etwa in halber Länge der Welle 27 und ist axial zwischen einer radialen Schulterfläche 31 in der Innenwand 32 eines Aufnahmeraumes 33 für die Welle 27 und einem Sicherungsring 34 angeordnet. Das andere Wälzlager 30 ist am freien Ende der Welle 27 vorgesehen und liegt in einer ringförmigen Vertiefung 35 in der Innenwand 36 eines im Durchmesser verjüngten Endbereiches 37 des Aufnahmeraumes 33. Das Wälzlager 30 hat kleineren Innen- und Außendurchmesser als das Wälzlager 29. Dadurch ist eine einfache Montage des Wälzlagers 30 von der offenen Stirnseite des Gehäuseteiles 14 aus möglich.

Auf der Welle 27 sitzt eine Schnecke 38, die in Eingriff ist mit einem Schneckenrad 39, das drehfest auf einer das Schneidrad 16 tragenden Welle 40 sitzt. Die Welle 27 liegt parallel zur Motorwelle 23. Die Welle 40 liegt senkrecht zur Welle 27. Wie sich aus Fig. 4 ergibt, liegen die Achse 41 der Welle 27 und die Achse 42 der Motorwelle 23 auf der gleichen Seite der Achse 43 der Welle 40. Wie sich aus Fig. 2 ergibt, liegt das Untersetzungsgetriebe 22, 24 auf der vom zu schneidenden Rohr 10 abgewandten Seite der Welle 40. Die aufgrund des Eingriffes der Getrieberäder 25, 26; 38, 39 auftretenden Kräfte wirken somit für den Schneid- bzw. Trennvorgang unterstützend. Die Welle 27 wird im Gehäuseteil 14 dadurch optimal abgestützt, daß das Wälzlager 29 im Bereich zwischen der Schnecke 38 und dem Zahnrad 26 vorgesehen ist.

Zur Betätigung der Gewindespindel 12 ist an der dem Ständer 11 gegenüberliegenden Seite des Bettes 1 ein Hebel 44 vorgesehen, der drehfest auf einer Welle 45 sitzt. Sie durchsetzt das Bett 1 nahe seiner Auflageseite 46 und ragt in den Ständer 11. Das innerhalb des Ständers 11 liegende Ende der Welle 45 trägt ein Kegelrad 47, das mit einem Kegelrad 48 am unteren Ende der Gewindespindel 12 kämmt. Durch Drehen des Hebels 44 in der gewünschten Richtung wird über das Kegelgetriebe 47, 48 die Gewindespindel 12 um ihre Achse 20 gedreht. Je nach Drehrichtung wird dadurch die Spindelmutter 13 nach oben oder nach unten bewegt. Die Welle 45 steht an ihrem hebelseitigen Ende über das Bett 1 vor. Damit die Welle 45 zuverlässig abgestützt ist, ist am Bett 1 ein Ansatz 49 vorgesehen, in dem die Welle 45 geführt und gelagert ist. Im Anschluß an das Kegelrad 47 ist die Welle 45 in einer Seitenwand 50 des Bettes 1 ebenfalls gelagert und geführt.

Die Gewindespindel 12 ist im Anschluß an das Kegelrad 48 in einer Querwand 51 des Trägers 11 geführt und gelagert. Im Bereich oberhalb der Querwand 51 ist die Gewindespindel 12 mit dem Gewinde versehen.

Der Ständer 11 hat vorteilhaft U-förmigen Querschnitt mit einem Steg 52, der zwei parallel zueinander liegende Schenkel 53 miteinander verbindet. In den Fig. 2 und 3 ist nur der eine Schenkel 53 erkennbar. Die Schenkel 53 können an ihren freien Enden in Richtung zueinander abgewinkelt sein. Der Steg 52 ist mit einem Längsschlitz versehen, der sich vom oberen Ende bis zur Querwand 51 erstreckt und in den die Spindelmutter 13 eingreift. Sie liegt an den Rändern dieses Schlitzes an. Außerdem liegt die Spindelmutter 13 an den einander zugewandten Innenseiten der Schenkel 53 an. Auf diese Weise ist die Spindelmutter 13 während ihrer Verschiebebewegung einwandfrei kipp- und verkantungsfrei geführt, so daß ein sauberer Trennvorgang am Rohr 10 durchgeführt werden kann. Die Gewindespindel 12 ist über die Spindelmutter 13 in der beschriebenen Weise am Ständer 11 abgestützt, so daß die Lagerung der Gewindespindel 12 in der Querwand 51 ausreicht.

Damit die Spindelmutter 13 an den Seitenrändern des Längsschlitzes im Steg 52 des Ständers 11 geführt werden kann, ist sie mit einem entsprechend schmalen Ansatz 57 an der Rückseite versehen.

Es ist auch ausreichend, wenn die Spindelmutter 13 an den Innenseiten der Schenkel 53 geführt wird. Dann muß der Steg 52 des Ständers 11 nicht mit einem Längsschlitz versehen sein.

Die Achse 43 der das Schneidrad 16 tragenden Welle 40 liegt in einer Vertikalebene 54, die durch den Scheitel 55 der prismenartigen Vertiefung 9 ragt. Die Rollen 2 bis 5 sind symmetrisch in bezug auf die Vertikalebene 54 angeordnet. Auch der Kontaktbereich 58 zwischen dem Schneidrad 16 und dem Rohr 10 liegt in der Vertikalebene 54. Durch diese Lage der Achse 43, des Kontaktbereiches 58 und des Scheitels 55 in der Vertikalebene 54 wird erreicht, daß während des Trennvorganges auf das Rohr 10 keine Querkräfte wirken. Die durch das Schneidrad 16 ausgeübte Druckkraft 56 wirkt in der Vertikalebene 54, wodurch das Rohr 10 gegen die Rollen 2 bis 5 gedrückt wird. Auf diese Weise ist ein sehr sauberer Trennschnitt möglich.

Beim Ausführungsbeispiel nach Fig. 2 hat das Rohr 10 einen solchen Durchmesser, daß es lediglich auf den beiden seitlichen Rollen 2, 5 aufliegt. Um den Trennvorgang zu beginnen, wird der Antrieb 18 eingeschaltet, so daß das Schneidrad 16 über das Untersetzungsgetriebe 22, 24 um die Achse 43 drehbar angetrieben wird. Der Knebel 44 und damit die Spindel 12 wird so gedreht, daß sich die Spindelmutter 13 nach unten bewegt. Hierbei kommt das angetriebene Schneidrad 16 in Berührung mit dem Rohr 10, das nunmehr durch das Schneidrad 16 um seine Achse drehend angetrieben wird.

Die Rollen 2 und 5 werden durch das drehende Rohr 10 ebenfalls um ihre zueinander parallelen Achsen gedreht.

Ist das Rohr 10 durchgetrennt, wird die Spindelmutter 13 durch Drehen der Spindel 12 in der anderen Richtung wieder nach oben bewegt, bis das Schneidrad 16 oberhalb des durchgetrennten Rohres 10 liegt.

Fig. 3 zeigt beispielhaft, daß auf die beschriebene Weise auch Rohre 10 mit sehr kleinem Durchmesser durchgetrennt werden können. In den dargestellten Ausführungsbeispielen hat das Rohr 10 einen Durchmesser von etwa 110 mm (Fig. 2) und das Rohr 10 in Fig. 3 einen Durchmesser von etwa 20 mm. Je nach Durchmesser der Rohre können in die Lagerböcke 6 der Trennvorrichtung Rollen 2 bis 5 mit unterschiedlichem Durchmesser eingelegt werden. Zu diesem Zweck sind die Rollen 2 bis 5 so in den Lagerböcken 6 gelagert, daß sie einfach abgenommen und gegen Rollen mit anderem Durchmesser ausgetauscht werden können.

Zum Antrieb der Gewindespindel 12 ist selbstverständlich auch ein motorischer Antrieb möglich.

Die Spindelmutter 13 ist vorteilhaft einstückig mit dem Gehäuseteil 14 ausgebildet. Dadurch ergibt sich eine besonders hohe Steifigkeit in diesem Bereich, in dem die Welle 40 gelagert ist. In Verbindung mit der beschriebenen Führung der Spindelmutter 13 im Ständer 11 wird dadurch eine hervorragende Führung des Schneidrades 16 gewährleistet, das dadurch einen einwandfreien senkrechten Schnitt am Rohr 10 ausführt. Die hohe Steifigkeit verhindert unerwünschte Schwingungen des Gehäuseteiles 14 bzw. des Schneidrades 16, die zu unsauberen Trennschnitten am Rohr 10 führen würden. Zu der hohen Trennsauberkeit trägt bei, daß das Schneidrad 16 ausschließlich senkrecht so bewegt wird, daß seine Drehachse 43 sowie der Kontaktbereich 58 in der Vertikalebene 54 verbleibt. Die Führung des Schneidrades 16 über die Spindelmutter 13 stellt sicher, daß unerwünschte Querbewegungen des Schneidrades 16 beim Trennvorgang nicht auftreten.

Die Trennvorrichtung gewährleistet trotz ihres konstruktiv sehr einfachen Aufbaus einen optimalen und sauberen Trennschnitt. Aufgrund der Linearführung des Schneidrades 16 beim Trennvorgang ändern sich die Eingriffsverhältnisse zwischen dem Schneidrad 16 und dem Rohr 10 nicht. Dies trägt zum sauberen Trennschnitt bei.

Durch die Dreiteilung des Gehäuses 14, 17, 21 läßt sich der Antrieb der Trennvorrichtung einfach und problemlos montieren. Die verschiedenen Gehäuseteile sind vorteilhaft mit Schrauben lösbar verbunden, so daß die Einzelteile der Trennvorrichtung jederzeit zugänglich sind.

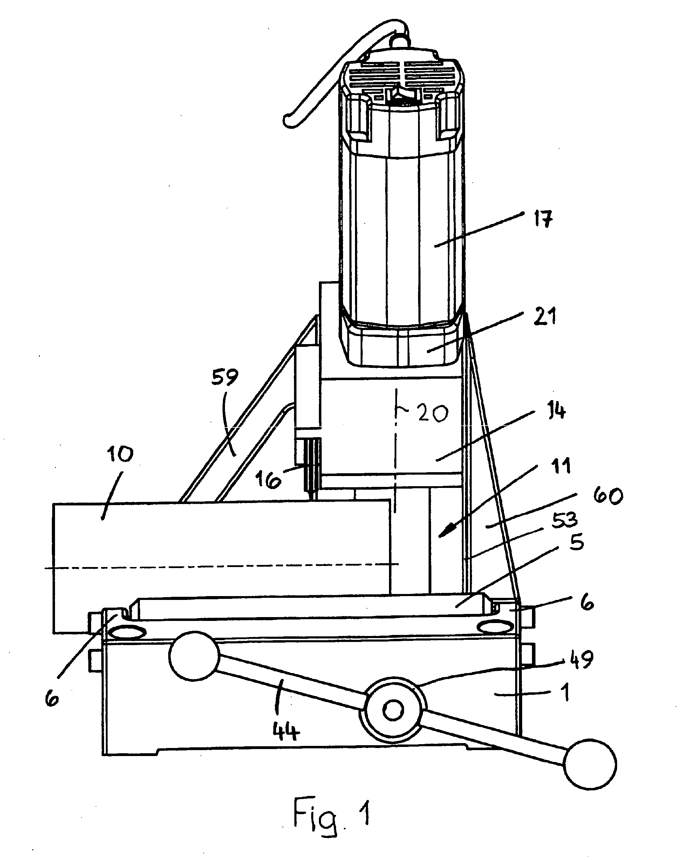

Zur Verbesserung der Qualität des Trennschnittes ist der Ständer 11 durch wenigstens eine Stützstrebe 59 (Fig. 1) abgestützt. Sie erstreckt sich etwa vom oberen Ende des Ständers 11 aus schräg nach unten und ist mit ihrem unteren Ende an einer Rückwand des Bettes 1 befestigt. Die Stützstrebe 59 greift an dem einen Schenkel 53 des Ständers 11 an. An der Außenseite des gegenüberliegenden Schenkels 53 des Ständers 11 ist eine Versteifungsrippe 60 vorgesehen, die zur hohen Steifigkeit des Ständers 11 beiträgt. Die Versteifungsrippe 60 erstreckt sich vom oberen Ende des Ständers 11 aus, nimmt in der Höhe stetig zu und ist mit dem Bett 1 verbunden.

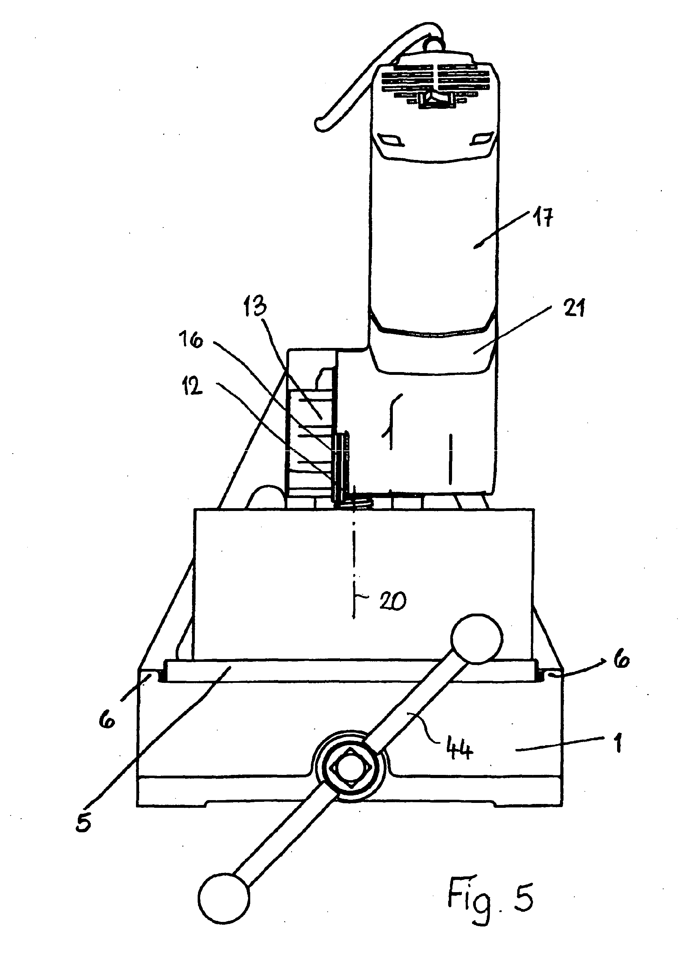

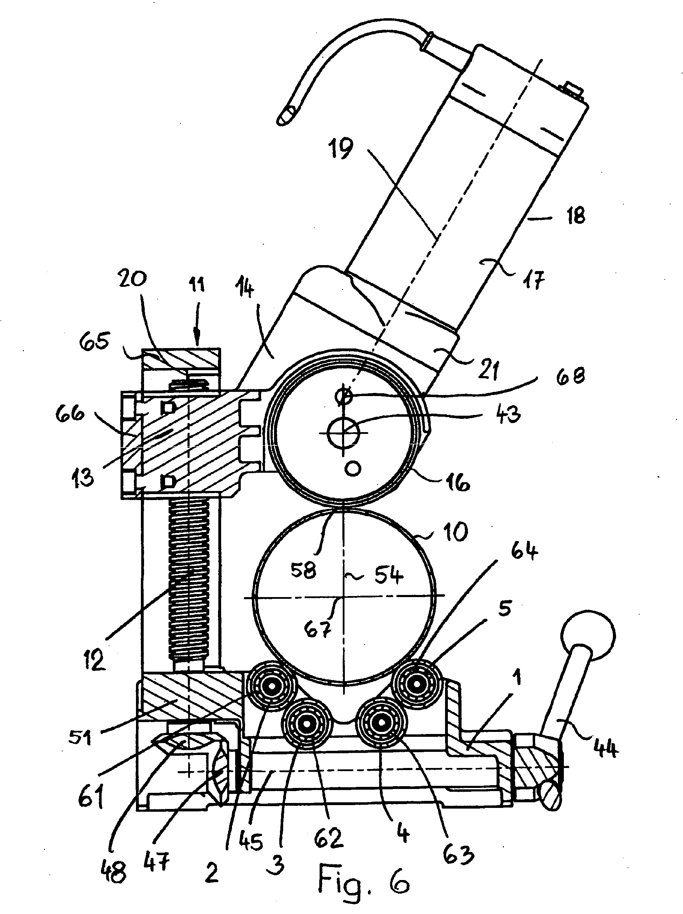

Die Fig. 5 und 6 zeigen eine Ausführungsform, die grundsätzlich gleich ausgebildet ist wie das vorige Ausführungsbeispiel. Die Trennvorrichtung hat das Bett 1, auf dem die Rollen 2 bis 5 frei drehbar gelagert sind. Erkennbar sind Kugellager 61 bis 64, mit denen die Enden der Rollen 2 bis 5 in den Lagerböcken 6 frei drehbar gelagert sind.

Mit dem Knebel 44 wird die Welle 45 gedreht, die über das Kegelradgetriebe 47, 48 die vertikale Gewindespindel 12 drehbar antreibt. Sie ist benachbart zum Kegelrad 48 in der Querwand 51 axial unverschieblich gelagert. Entsprechend der vorigen Ausführungsform ist die Gewindespindel 12 am oberen Ende nicht drehbar abgestützt.

Auf der Gewindespindel 12 sitzt die Spindelmutter 13, die im Gegensatz zur vorigen Ausführungsform nicht einstückig mit dem Gehäuseteil 14 ausgebildet ist. Er ist über den zwischen Gehäuseteil 21 mit dem Gehäuseteil 17 des Antriebes 18 verbunden. Wie bei der vorigen Ausführungsform liegt die Achse 19 des Antriebes 18 unter einem spitzen Winkel zur Achse 20 der Gewindespindel 12.

Der die Gewindespindel 12 ausnehmende Ständer 11 ist durch eine Querwand 65 am oberen Ende geschlossen.

An der vom Antrieb 18 abgewandten Seite sitzt auf der Spindelmutter 13 eine Abdeckplatte 66, die über den Ständer 11 vorsteht.

Wie beim vorigen Ausführungsbeispiel liegt der Kontaktbereich 58 (Fig. 6) zwischen dem Rohr 10 und dem Schneidrad 16 in der Vertikalebene 54, in der die Achse 43 des Schneidrades 16 und die Achse 67 des Rohres 10 liegen. Die Vertikalebene 54 bildet wie bei der vorigen Ausführungsform die Symmetrieebene der vier Rollen 2 bis 5. Ebenso liegt der Schnittpunkt 68 der Achse 19 des Gehäuseteiles 17 und der Vertikalebene 54 auf der vom Rohr 10 abgewandten Seite der Achse 43 des Schneidrades 16. Durch diese Lage ist gewährleistet, daß das Schneidrad 16 das Rohr 10 in der beschriebenen Weise einwandfrei durchtrennt.

Wie Fig. 5 zeigt, hat die Achse 20 der Gewindespindel 12, senkrecht zur Achse gesehen, nur sehr geringen Abstand von der das Schneidrad 16 bzw. seine Schneidradkante enthaltenden Ebene. Dadurch ist das Drehmoment um die Vertikalachse optimal verringert. Bei der Ausführungsform nach den Fig. 1 bis 4 ist dieser Abstand zwischen der Achse 20 der Gewindespindel 1 und der das Schneidrad 16 bzw. seine Schneidradkante enthaltenden Ebene größer. Aufgrund der stabilen steifen Formgestaltung der Trennvorrichtung ist dennoch eine ausreichend hohe Schnittgenauigkeit gewährleistet.

Wie sich aus Fig. 6 ergibt, ist der Abstand der Drehachse 43 des Schneidrades 16 von der Achse 20 der Gewindespindel 12 so gewählt, daß er etwa dem Durchmesser des Schneidrades 16 entspricht.

Bei beiden beschriebenen Ausführungsformen ist es möglich, parallel zum Schneidrad 16 Abstützrollen vorzusehen, die frei drehbar gelagert sind und auf dem durchzutrennenden Rohr 10 beiderseits des Schneidrades 16 aufliegen. Da der Antrieb 18 oberhalb des Schneidrades 16 liegt, kann die Trennvorrichtung sehr kompakt ausgebildet sein. Das Gewicht des Antriebes 18 sowie des Gehäuseteiles 21 mit den Getriebeteilen führt in Verbindung mit der beschriebenen Lage des Antriebes 18 dazu, daß das Schneidrad 16 in Richtung auf das Rohr 10 belastet wird, wodurch ein sauberer Trennschnitt gewährleistet wird. Der Knebel 44, mit dem die Gewindespindel 12 über die Welle 45 und das Kegelradgetriebe 47, 48 angetrieben wird, befindet sich am Bett 1 und nicht im Bereich des Schneidrades 16. Beim Betätigen des Knebels 44 auftretende Erschütterungen wirken sich dadurch nicht auf den Trennvorgang aus. Eventuelle auftretende Erschütterungen beim Drehen der Welle 45 mittels des Knebels 44 werden vom Bett 1 aufgenommen. Der Antrieb 18 hat nur geringes Gewicht, so daß die gesamte Trennvorrichtung ebenfalls nur geringes Gewicht hat und vom Installateur problemlos getragen werden kann. Die Gewindespindel 12 liegt geschützt innerhalb des Ständers 11, so daß die Gefahr einer Verschmutzung gering ist.

Zum Drehen der Welle 45 ist es auch möglich, einen kleinen Antriebsmotor zu verwenden, so daß die Welle 45 und damit die Gewindespindel 12 motorisch verstellt werden können.

## Patentansprüche

1. Trennvorrichtung für Werkstücke (10), wie Rohre, Stangen und dergleichen, mit mindestens einer Auflage für die Werkstücke (10), die auf zueinander parallelen, frei drehbaren Rollen (2 bis 5) der Auflage aufliegen, die mit ihren Enden in Lagerböcken (6) drehbar gelagert sind, die jeweils eine Vertiefung (9) aufweisen, zu deren Längsmittelebene (54) die Rollen (2 bis 5) symmetrisch liegen, die teilweise über den Boden (7, 8) der Vertiefung (9) ragen, und mit einem Schneidrad (16), das in Richtung auf die Auflage mit einem Antrieb (18) verstellbar ist, der im Bereich oberhalb des Schneidrades (16) angeordnet ist,
wobei der Antrieb (18) in einem Gehäuse (14, 17, 21) untergebracht ist, das mit einer Spindelmutter (13) verbunden ist, die auf einer Gewindespindel (12) sitzt, **dadurch gekennzeichnet, dass** die Gewindespindel (12) über ein Getriebe (47, 48) mit einer Antriebswelle (45) verbunden und in einem Ständer (11) untergebracht ist, der eine Geradführung für das Schneidrad (16) bildet und die Spindelmutter (13) gegen Verkanten und/oder Verdrehen sichert, und dass die Kontaktstelle (58) zwischen dem Schneidrad (16) und dem Werkstück (10) während des Trennvorganges in der Längsmittelebene (54) der Vertiefung (9) der Lagerböcke (6) liegt, derart, dass die vom Schneidrad (16) auf das Werkstück (10) ausgeübte Kraft (56) während des Trennvorganges in der Längsmittelebene (54) der Vertiefung (9) wirkt.

2. Trennvorrichtung nach Anspruch 1,
**dadurch gekennzeichnet, daß**
die Achse (19) des Antriebes (18) mit der Achse (43) des Schneidrades (16) einen Winkel einschließt Spindelmutter (13) sitzt.

3. Trennvorrichtung nach Anspruch 1 oder 2,
**dadurch gekennzeichnet, daß** die Spindelmutter (13) eckigen Umriß aufweist.

4. Trennvorrichtung nach einem der Ansprüche 1 bis 3,
**dadurch gekennzeichnet, daß** der Ständer (11) als Profilteil ausgebildet ist.

5. Trennvorrichtung nach einem der Ansprüche 1 bis 4,
**dadurch gekennzeichnet, daß** der Ständer (11) U-förmigen Querschnitt hat.

6. Trennvorrichtung nach Anspruche 5, d.g., daß die Spindelmutter (13) zwischen den Schenkeln (53) des Ständers (11) liegt.

7. Trennvorrichtung nach Anspruch 5, oder 6,
**dadurch gekennzeichnet, daß** der Steg (52) des Ständers (11) einen in Verschieberichtung des Schneidrades (16) verlaufenden Schlitz hat, in den die Spindelmutter (13) mit einem Ansatz (57) eingreift.

8. Trennvorrichtung nach einem der Ansprüche 1 bis 7,
**dadurch gekennzeichnet, daß** die Längsachse (19) des Gehäuses (14, 17, 21) des Antriebes (18) mit der Längsachse (20) des Ständers (11) einen spitzen Winkel einschließt.

9. Trennvorrichtung nach einem der Ansprüche 1 bis 8,
**dadurch gekennzeichnet, daß** der Antrieb (18) ein Elektromotor ist, dessen Antriebswelle (23) über ein Untersetzungsgetriebe (22, 24) mit einer Schneidradwelle (40) verbunden ist.

10. Trennvorrichtung nach Anspruch 9,
**dadurch gekennzeichnet, daß** das Untersetzungsgetriebe (22, 24) eine Zahnradstufe (25, 26) aufweist.

11. Trennvorrichtung nach Anspruch 9 oder 10,
**dadurch gekennzeichnet, daß** das Untersetzungsgetriebe (22, 24) ein Schneckengetriebe (38, 39) aufweist, und daß ein Schnekkenrad (39) des Schneckengetriebes (38, 39) auf der Schneidradwelle (40) sitzt.

12. Trennvorrichtung nach Anspruch 11,
**dadurch gekennzeichnet, daß** eine Schnecke (38) des Schneckengetriebes (38, 39) etwa in halber Länge auf einer Zwischenwelle (27) sitzt.

13. Trennvorrichtung nach Anspruch 12,
**dadurch gekennzeichnet, daß** die Zwischenwelle (27) mit zwei Lagern (29, 30) in einem Aufnahmeraum (33) des Gehäuses (14, 17, 21) abgestützt ist, und daß das eine Lager (30) an einem Ende der Zwischenwelle (27) und das andere Lager (29) mit Abstand vom anderen Ende (28) der Zwischenwelle (27) vorgesehen sind.

14. Trennvorrichtung nach Anspruch 13,
**dadurch gekennzeichnet, daß** das andere Lager (29) im Bereich zwischen der Schnecke (38) des Schneckengetriebes (38, 39) und dem Zahnrad (26) des Zahnradgetriebes (25, 26) angeordnet ist.

15. Trennvorrichtung nach Anspruch 13 oder 14,
**dadurch gekennzeichnet, daß** das am Ende der Zwischenwelle (27) liegende Lager (30) kleineren Durchmesser hat als das andere Lager (29).

16. Trennvorrichtung nach einem der Ansprüche 1 bis 15,
**dadurch gekennzeichnet, daß** das Gehäuse (14, 17, 21) aus zumindest zwei lösbar miteinander verbundenen Gehäuseteilen besteht.

17. Trennvorrichtung nach Anspruch 16, d.g., daß im einen Gehäuseteil (17) der Antrieb (18), im anderen Gehäuseteil (14) die Schneidradwelle (40) und in einem mittleren Gehäuseteil (21) ein Teil des Untersetzungsgetriebes (22, 24) untergebracht sind.

18. Trennvorrichtung nach einem der Ansprüche 1 bis 17,
**dadurch gekennzeichnet, daß** die Antriebswelle (45) für die Gewindespindel (12) unterhalb der Auflage senkrecht zu den Rollen (2 bis 5) verläuft.

19. Trennvorrichtung nach einem der Ansprüche 1 bis 18,
**dadurch gekennzeichnet, daß** die Auflage (2 bis 5) zwei äußere, auf gleicher Höhe liegende Rollen (2, 5) und wenigstens zwei innere, auf gleicher Höhe liegende Rollen (3, 4) aufweist, die tiefer liegen als die äußeren Rollen (2, 5).

20. Trennvorrichtung nach einem der Ansprüche 1 bis 19,
**dadurch gekennzeichnet, daß** die Vertiefung (9) Lagerböde (6) einen V. förmig ausgebildeten Boden (7, 8) aufweist.

21. Trennvorrichtung nach einem der Ansprüche 1 bis 20,
**dadurch gekennzeichnet, daß** die Achse (19) des Antriebes (18) und die die Achse (43) des Schneidrades (16) enthaltende Axialebene (54) des Werkstückes (10) auf der dem Werkstück (10) gegenüberliegenden Seite der Achse (43) des Schneidrades (16) einander schneiden.

22. Trennvorrichtung nach einem der Ansprüche 1 bis 21,
**dadurch gekennzeichnet, daß** der Abstand der Achse (43) des Schneidrades (16) von der Achse (20) der Gewindespindel (12) etwa dem Durchmesser des Schneidrades (16) entspricht.

23. Trennvorrichtung nach einem der Ansprüche 1 bis 22,
**dadurch gekennzeichnet, daß** die Trennvorrichtung ein Bett (1) aufweist, an dem eine Handhabe (44) zur Höhenverstellung des Schneidrades (16) drehbar gelagert ist.

24. Trennvorrichtung nach Anspruch 23,
**dadurch gekennzeichnet, daß** die Antriebswelle (45) im Bett (1) untergebracht ist.

## Claims

1. Cutting device for workpieces (10), like tubes, bars, or the like, with at least one rest for the workpieces (10), which lay on free rotatable parallel to each other extending rollers (2 to 5) of the rest, with their ends rotatingly mounted within brackets (6), each comprising a recess (9), to the midplane (54) of which the rollers (2 to 5) lay symmetrically, which partially project over the bottom (7, 8) of the recess (9), and with a cutting wheel (16), adjustable in the direction towards the rest by a drive (18), disposed within the zone above the cutting wheel (16), whereby the drive (18) is seated within a housing (14, 17, 21), connected to a spindle nut (13), fitted on a threaded spindle (12),
**characterised in that** the threaded spindle (12) is connected via a gear (47, 48) with a drive shaft (45) and is positioned within a column (11), forming a straight-line guidance for the cutting wheel (16) and preventing spindle nut (13) from canting and/or twisting and that, during the cutting process, the contact point (58) between the cutting wheel (16) and the workpiece (10) is positioned in the longitudinal midplane (54) of the recess (9) of the brackets (6), in such a way, that the force (56), acting on the workpiece (10) from the cutting wheel (16) during the cuttting process is affected in the longitudinal midplane (54) of the recess (9).

2. Cutting device according to claim 1,
**characterised in that** the axis (19) of the drive (18) confines an angle with the axis (43) of the cutting wheel (16).

3. Cutting device according to claim 1 or 2,
**characterised in that** the spindle nut (13) comprises an angular contour.

4. Cutting device according to one of the claims 1 to 3,
**characterised in that** the column (11) is configured as a profiled part.

5. Cutting device according to one of the claims 1 to 4,
**characterised in that** the column (11) has an U-shaped cross-section.

6. Cutting device according to claim 5,
**characterised in that** the spindle nut (13) is positioned between the legs (53) of the column (11).

7. Cutting device according to claim 5 or 6,
**characterised in that** the bar (52) of the column (11) has a slot, running in the direction of displacement of the cutting wheel (16) into which the spindle nut (13) engages with an attachment (57).

8. Cutting device according to one of the claims 1 to 7,
**characterised in that** the longitudinal axis (19) of the housing (14, 17, 21) of the drive (18) confines an acute angle with the longitudinal axis of the column (11).

9. Cutting device according to one of the claims 1 to 8,
**characterised in that** the drive (18) is an electric motor, the drive shaft (23) of which is connected to a cutting wheel shaft (40) via a reduction gear (22, 24).

10. Cutting device according to claim 9,
**characterised in that** the reduction gear (22, 24) comprises a toothed gear stage (25, 26).

11. Cutting device according to claim 9 or 10,
**characterised in that** the reduction gear (22, 24) comprises a worm gear (38, 39), and that a worm wheel (39) of the worm gear (38, 39) sits on the cutting wheel shaft (40).

12. Cutting device according to claim 11,
**characterised in that** a worm (38) of the worm gear (38, 39) sits on an intermediate shaft (27) at approximately half the length.

13. Cutting device according to claim 12,
**characterised in that** the intermediate shaft (27) is supported by two bearings (29, 30) within a reception space (33) of the housing (14, 17, 21) and that the one bearing (30) is provided at one end of the intermediate shaft (27) and the other bearing (29) with distance from the other end (28) of the intermediate shaft (27).

14. Cutting device according to claim 13,
**characterised in that** the other bearing (29) is positioned in the area between the worm (38) of the worm gear (38, 39) and the gear wheel (26) of the gearing (25, 26).

15. Cutting device according to claim 13 or 14,
**characterised in that** the bearing (30), positioned at the end of the intermediate shaft (27) has a smalller diameter than the other bearing (29).

16. Cutting device according to one of the claims 1 to 15,
**characterised in that** the housing (14, 17, 21) is composed of at least two housing parts connected to each other in a detachable way.

17. Cutting device according to claim 16,
**characterised in that** in the one housing part (17) the drive (18) and in the other housing part (14) the cutting wheel shaft (40) are positioned, and in a middle part of the housing (21) a part of the reduction gear (22, 24) is positioned.

18. Cutting device according to one of the claims 1 to 17,
**characterised in that** the drive shaft (45) for the threaded spindle (12) below the rest extends vertical to the rollers (2 to 5).

19. Cutting device according to one of the claims 1 to 18,
**characterised in that** the rest (2 to 5) comprises two outer rollers (2, 5), each positoned at the same level, and at least two inner rollers (3, 4), each positioned at the same level, positioned lower than the outer rollers (2, 5).

20. Cutting device according to one of the claims 1 to 19,
**characterised in that** the recess (9) of the brackets (6) comprises a V-shaped bottom (7, 8).

21. Cutting device according to one of the claims 1 to 20,
**characterised in that** the axis (19) of the drive (18) and the axial plane (54) of the workpiece (10), containing the axis (43) of the cutting wheel (16) cross each other within the side of the axis (43) of the cutting wheel (16), opposing the workpiece (10).

22. Cutting device according to one of the claims 1 to 21,
**characterised in that** the distance of the axis (43) of the cutting wheel (16) from the axis (20) of the threaded spindle (12) corresponds approximately to the diameter of the cutting wheel (16).

23. Cutting device according to one of the claims 1 to 22,
**characterised in that** the cutting device comprises a bed (1), on which is rotatably mounted a handle (44) for the height adjustment of the cutting wheel (16).

24. Cutting device according to claim 23,
**characterised in that** the drive shaft (45) is seated in the bed (1).

## Revendications

1. Dispositif de tronçonnage pour pièces d'oeuvre (10) telles que des tubes, des barres et éléments similaires, comprenant au moins un appui pour les pièces d'oeuvre (10) reposant sur des rouleaux (2 à 5) de l'appui, qui sont librement tournants et mutuellement parallèles, et sont montés en rotation avec leurs extrémités dans des supports de palier (6) présentant chacun une encoche en creux (9), les rouleaux (2 à 5) étant placés symétriquement par rapport au plan médian longitudinal (54) de ces encoches en creux et dépassant en partie au-dessus du fond (7, 8) de l'encoche en creux (9), le dispositif comprenant en outre une roue de coupe (16) qui peut être déplacée en direction de l'appui avec un moyen d'entraînement (18) agencé dans une zone au-dessus de la roue de coupe (16), le moyen d'entraînement (18) étant logé dans un carter (14, 17, 21) qui est relié à un écrou de broche (13) placé sur une broche filetée (12), **caractérisé en ce que** la broche filetée (12) est reliée, par l'intermédiaire d'un système de transmission (47, 48), à un arbre d'entraînement (45) et est logée dans un montant (11) qui forme un guide rectiligne pour la roue de coupe (16) et assure l'écrou de broche (13) à l'encontre d'un coincement et/ou d'une rotation relative, et **en ce que** la zone de contact (58) entre la roue de coupe (16) et la pièce d'oeuvre (10) pendant l'opération de tronçonnage se situe dans le plan médian longitudinal (54) de l'encoche en creux (9) des supports de palier (6) de façon telle, que la force (56) exercée par la roue de coupe (16) sur la pièce d'oeuvre (10) pendant l'opération de tronçonnage agisse dans le plan médian longitudinal (54) de l'encoche en creux (9).

2. Dispositif de tronçonnage selon la revendication 1, **caractérisé en ce que** l'axe (19) du moyen d'entraînement (18) forme un angle avec l'axe (43) de la roue de coupe (16).

3. Dispositif de tronçonnage selon la revendication 1 ou la revendication 2, **caractérisé en ce que** l'écrou de broche (13) présente un tracé de contour polygonal.

4. Dispositif de tronçonnage selon l'une des revendications 1 à 3, **caractérisé en ce que** le montant (11) est réalisé en tant que pièce de profilé.

5. Dispositif de tronçonnage selon l'une des revendications 1 à 4, **caractérisé en ce que** le montant (11) présente une section transversale en forme de U.

6. Dispositif de tronçonnage selon la revendication 5, **caractérisé en ce que** l'écrou de broche (13) est placé entre les ailes (53) du montant (11).

7. Dispositif de tronçonnage selon la revendication 5 ou la revendication 6, **caractérisé en ce que** l'âme (52) du montant (11) présente une fente qui s'étend dans la direction de coulissement de la roue de coupe (16) et dans laquelle vient s'engager l'écrou de broche (13) avec un appendice (57).

8. Dispositif de tronçonnage selon l'une des revendications 1 à 7, **caractérisé en ce que** l'axe longitudinal (19) du carter (14, 17, 21) du moyen d'entraînement (18), forme un angle aigu avec l'axe longitudinal (20) du montant (11).

9. Dispositif de tronçonnage selon l'une des revendications 1 à 8, **caractérisé en ce que** le moyen d'entraînement (18) est un moteur électrique dont l'arbre d'entraînement (23) est relié par l'intermédiaire d'un réducteur (22, 24) à l'arbre de roue de coupe (40).

10. Dispositif de tronçonnage selon la revendication 9, **caractérisé en ce que** le réducteur (22, 24) comprend un étage d'engrenages (25, 26).

11. Dispositif de tronçonnage selon la revendication 9 ou la revendication 10, **caractérisé en ce que** le réducteur (22, 24) comprend une transmission à vis sans fin (38, 39), et **en ce qu'**une roue tangente (39) de la transmission à vis sans fin (38, 39) est placée sur l'arbre de roue de coupe (40).

12. Dispositif de tronçonnage selon la revendication 11, **caractérisé en ce qu'**une vis sans fin (38) de la transmission à vis sans fin (38, 39) est placée environ à mi-longueur sur un arbre intermédiaire (27).

13. Dispositif de tronçonnage selon la revendication 12, **caractérisé en ce que** l'arbre intermédiaire (27) est supporté par deux paliers (29, 30) dans un logement de réception (33) du carter (14, 17, 21), et **en ce qu'**un palier (30) est prévu à une extrémité de l'arbre intermédiaire (27), et l'autre palier (29) est prévu à distance de l'autre extrémité (28) de l'arbre intermédiaire (27).

14. Dispositif de tronçonnage selon la revendication 13, **caractérisé en ce que** ledit autre palier (29) est agencé dans la zone entre la vis sans fin (38) de la transmission à vis sans fin (38, 39) et la roue dentée (26) de la transmission par engrenages (25, 26).

15. Dispositif de tronçonnage selon la revendication 13 ou la revendication 14, **caractérisé en ce que** le palier (30) situé à l'extrémité de l'arbre intermédiaire (27) présente un diamètre plus faible que l'autre palier (29).

16. Dispositif de tronçonnage selon l'une des revendications 1 à 15, **caractérisé en ce que** le carter (14, 17, 21) est constitué d'au moins deux parties de carter reliées de manière amovible.

17. Dispositif de tronçonnage selon la revendication 16, **caractérisé en ce que** dans une partie de carter (17) est logé le moyen d'entraînement (18), dans l'autre partie de carter (14) est logé l'arbre de roue de coupe (40), et dans une partie de carter centrale (21) est logée une partie du réducteur (22, 24).

18. Dispositif de tronçonnage selon l'une des revendications 1 à 17, **caractérisé en ce que** l'arbre d'entraînement (45) pour la broche filetée (12) s'étend sous l'appui, perpendiculairement aux rouleaux (2 à 5).

19. Dispositif de tronçonnage selon l'une des revendications 1 à 18, **caractérisé en ce que** l'appui (2 à 5) comprend deux rouleaux externes (2, 5) situés à une même hauteur, et au moins deux rouleaux internes (3, 4), qui sont situés sur une même hauteur et sont placés à un niveau plus bas que les rouleaux externes (2, 5).

20. Dispositif de tronçonnage selon l'une des revendications 1 à 19, **caractérisé en ce que** l'encoche en creux (9) des supports de palier (6), présente un fond (7, 8) d'une configuration en forme de V.

21. Dispositif de tronçonnage selon l'une des revendications 1 à 20, **caractérisé en ce que** l'axe (19) du moyen d'entraînement (18) et le plan axial (54) de la pièce d'oeuvre (10) contenant l'axe (43) de la roue de coupe (16), se coupent sur le côté de l'axe (43) de la roue de coupe (16), qui est situé à l'opposé de celui où se situe la pièce d'oeuvre (10).

22. Dispositif de tronçonnage selon l'une des revendications 1 à 21, **caractérisé en ce que** la distance de l'axe (43) de la roue de coupe (16) à l'axe (20) de la broche filetée (12) correspond environ au diamètre de la roue de coupe (16).

23. Dispositif de tronçonnage selon l'une des revendications 1 à 22, **caractérisé en ce que** le dispositif de tronçonnage comprend un banc (1) sur lequel est montée rotative une poignée de manoeuvre (44) pour le déplacement en hauteur de la roue de coupe (16).

24. Dispositif de tronçonnage selon la revendication 23, **caractérisé en ce que** l'arbre d'entraînement (45) est logé dans le banc (1).
